# EUROPEAN PATENT SPECIFICATION

(11) **EP 4 286 641 B1**
(45) Date of publication and mention of the grant of the patent: **15.10.2025**
(21) Application number: 22770196.8
(22) Date of filing: 22.01.2022
(51) Int. Cl.: E06B 3/96, E06B 9/52, E06B 3/964

(54) **CORNER CONNECTOR STRUCTURE OF SCREEN APPARATUS**
ECKVERBINDERSTRUKTUR EINER ABSCHIRMVORRICHTUNG
STRUCTURE DE RACCORD D'ANGLE D'UN APPAREIL À ÉCRAN

(30) Priority: 17.03.2021 CN 202110284184
(43) Date of publication of application: 06.12.2023
(73) Proprietor: Taroko Door & Window Technologies, Inc., Gaoxiong, Taiwan 83160 (TW)
(72) Inventor: WANG, Yimin, Gaoxiong, Taiwan 83160 (CN)
(74) Representative: Tahtadjiev, Konstantin
(86) International application number: PCT/CN2022/073323
(87) International publication number: WO 2022/193836

(56) References cited:
- WO-A1-2021/035659
- CN-A- 103 590 722
- CN-A- 110 318 636
- CN-A- 111 322 001
- CN-A- 111 322 001
- CN-A- 112 908 182
- CN-U- 209 539 127
- CN-U- 211 776 943
- CN-U- 211 776 943
- DE-A1- 2 353 666
- KR-A- 20080 029 057

## Description

### Technical Field

The present invention relates to a corner connector structure, in particular to a corner connector structure used for a screen apparatus such as a folding screen or a rolling bar screen.

### Background Art

A currently used screen apparatus, including both a folding screen window and a rolling bar screen window, often uses a plurality of wheel bodies to bypass a track wire or uses a wire adjusting apparatus to adjust the tightness of the track wire. However, due to such a structural configuration that the current wheel body or the wire adjusting apparatus is assembled on a frame material of a window frame, when a screen is opened or closed, the track wire is prone to swing due to stress, leading to the situation that the track wire often swings out of the track of the window frame, which is prone to result in the situation that the screen is unsmoothly opened or closed or gets stuck when the screen is subsequently opened or closed.

KR20080029057A discloses a folding insect screen system integrated with a sunshade, including a corner connector structure that connects horizontal and vertical frames. The system features a tension adjustment mechanism mounted on the frame materials, allowing for the adjustment of wires that secure the insect screen and sunshade in place. However, KR20080029057A does not disclose the direct installation of a wire adjuster within the corner connector structure itself. Instead, the wire adjuster is mounted onto pre-processed holes or grooves in the frame materials, requiring additional material preparation and increasing installation complexity.

CN211776943U discloses a corner connector structure designed for connecting the horizontal and vertical frames of door and window frameworks. The structure includes angle arms with buckle portions and hook portions to facilitate connection and alignment. However, CN211776943U does not disclose integrating a wire adjuster within the corner connector structure. Instead, it focuses on the mechanical connection of frames and components without addressing the adjustment or tensioning of wires.

CN111322001A discloses a screen wire adjustment and control device featuring a fixing seat with a containing groove and an elastic shifting sheet to facilitate the assembly and disassembly of a thread adjusting body. While this device focuses on improving the ease of handling the wire adjustment mechanism, it is mounted onto frame materials rather than directly integrated into a corner connector structure. CN111322001A also relies on pre-processed grooves or holes in the frame material for installation.

### Summary of the Invention

According to the technical solution of the present invention, a corner connector structure of a screen apparatus, including a body, the body being at least provided with a first connecting part and a second connecting part which is separated from the first connecting part by an angle, a combining groove being provided at the position of the first connecting part or the second connecting part of the body, the combining groove being provided with an opening, and a wire adjuster being provided in the combining groove.

The present invention has the beneficial effects that the present invention mainly aims to provide a corner connector structure of a screen apparatus; according to the corner connector structure of a screen apparatus, mainly a track wire is accommodated in a wire adjuster of the corner connector; thus, in a case that the track wire swings due to stress when a screen is opened or closed, the situation that the track wire swings out of a track of a frame material is avoided, so that the problem that the screen is unsmoothly opened or closed or gets stuck easily when a screen is opened or closed can be solved.

### Brief Description of the Drawings

FIG. 1 is a schematic view of a frame body formed by the present invention and frame materials.
FIG. 2 is a three-dimensional schematic view of the present invention.
FIG. 3 is a schematic exploded view of a body in the present invention.
FIG. 4 is a schematic exploded view of a wire adjuster in the present invention.
FIG. 5 is a cross-sectional view of the wire adjuster in the present invention.

### Detailed Description

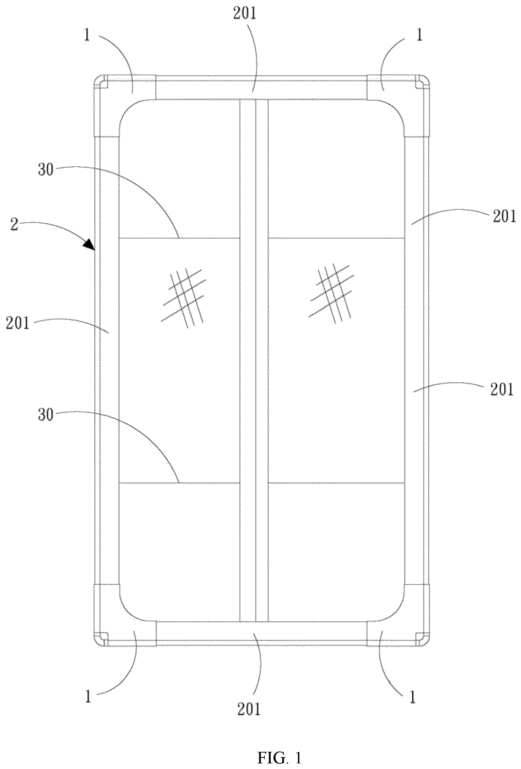

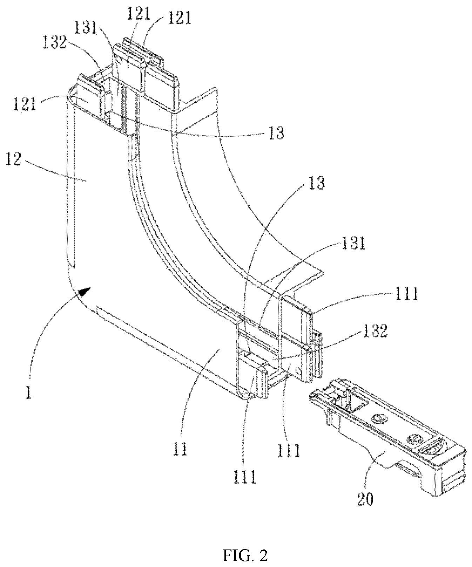

Please refer to FIG. 1 to FIG. 3, a preferable embodiment of a corner connector structure of a screen apparatus of the present invention mainly includes a body (1), the body (1) being at least provided with a first connecting part (11) and a second connecting part (12) which is separated from the first connecting part (11) by an angle, the first connecting part (11) being at least provided with a first combining piece (111), and the second connecting part (12) being at least provided with a second combining piece (121). However, since frame materials (201) of a frame body (2) are each provided with a recessed groove, in this embodiment, the first combining piece (111) and the second combining piece (121) are both an inserting piece, so the first connecting part (11) and the second connecting part (12) are each provided with three inserting pieces to be inserted and fixed in the recessed groove of the frame material (201). Thus, in this embodiment, the frame body (2) can be formed by means of the plurality of frame materials (201) and the plurality of bodies (1). Further, it is preferable that the first connecting part (11) is separated from the second connecting part (12) by 85-95 degrees. Furthermore, the body (1) can be assembled in a one-piece molding or two-piece manner.

Please refer to FIG. 1 to FIG. 3, a combining groove (13) is provided at the position of the first connecting part (11) and/or the second connecting part (12), the combining groove (13) is at least provided with an opening (131) and a lateral notch (132), and a wire adjuster (20) is provided in the opening (131). In this embodiment, only the wire adjuster (20) being assembled in the combining groove (13) of the first connecting part (11) is illustrated, however the present invention is not limited thereto.

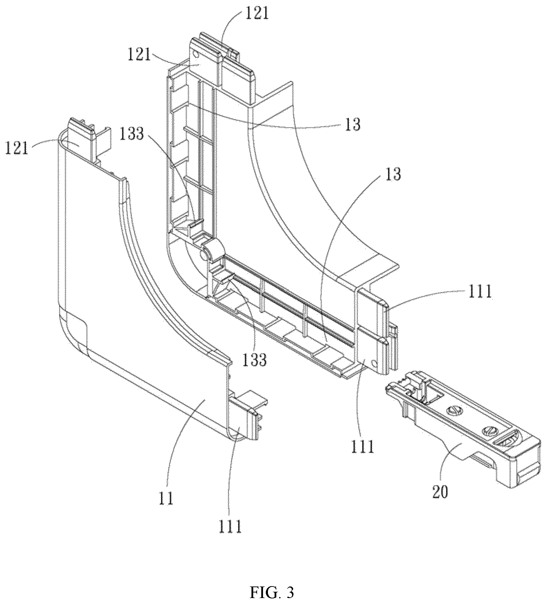

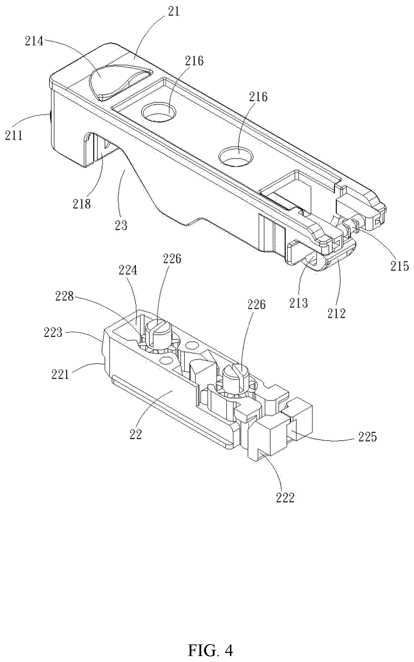

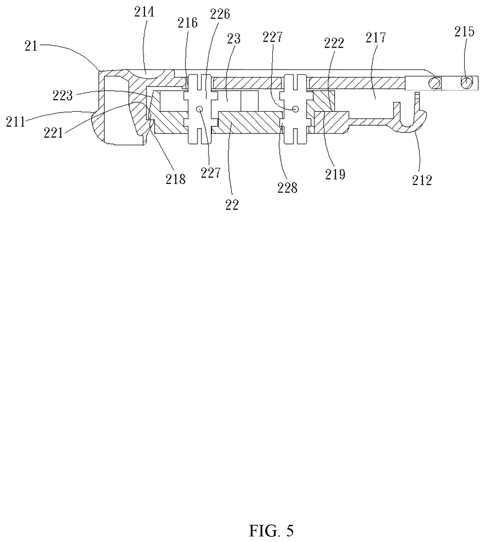

Please refer to FIG. 3 to FIG. 5, the wire adjuster (20) includes a fixing base (21) and a wire adjusting base (22). The fixing base (21) is provided on the opening (131) of the combining groove (13) of the frame body (1). The fixing base (21) is provided with a convex clamping part (211) and a fastener (212) relative to the outer side of the opening (131) of the combining groove (13). The convex clamping part (211) protrudes out of the peripheral edge of the fixing base (21) by a distance. The position of one groove wall of the combining groove of the body (1) opposite to the fastener (212) is provided with an abutting butt part (133). Besides, the fastener (212) is sheet-shaped. One end portion of the fastener (212) is connected to the fixing base (21). The other end portion of the fastener (212) is separated from the fixing base (21) by a distance and forms a compression space (213). The compression space (213) is greater than the distance by which the convex clamping part (211) protrudes out of the peripheral edge of the fixing base (21). The top of the fixing base (21) is provided with a pushing part (214) and a wire returning part (215). **In** this embodiment, the pushing part (214) is a recessed groove, the wire returning part (215) is a rod body, and the structure of the pushing part (214) and the wire returning part (215) is not limited to the foregoing. Further, the bottom of the fixing base (21) is provided with an accommodating groove (23), and the accommodating groove (23) is provided with at least one through hole (216) towards the top of the fixing base (21) and at least one wire inlet (217) at the position of the wire returning part (215). A first limiting protruding part (218) and a second limiting protruding part (219) are provided in the accommodating groove (23).

Please refer to FIG. 3 to FIG. 5, the wire adjusting base (22) is accommodated in the accommodating groove (23) of the fixing base (21), and the wire adjusting base (22) is provided with a first recessed part (221) and a second recessed part (222) relative to the first limiting protruding part (218) and the second limiting protruding part (219) of the fixing base (21). The position of the wire adjusting base (22) close to the first recessed part (221) is provided with a guiding bevel (223). **In** the process that the wire adjusting base (22) is accommodated in the accommodating groove (23) of the fixing base (21). The end of the wire adjusting base (22) being provided with the second recessed part (222) first obliquely extends into the accommodating groove (23) of the fixing base (21). Then, the other end of the wire adjusting base (22) is in contact with the first limiting protruding part (218) of the fixing base (22) by means of the guiding bevel (223), so that the other end of the wire adjusting base (22) can slide into the accommodating groove (23) of the fixing base (21) along the guiding bevel (223). At this moment, the first recessed part (221) and the second recessed part (222) of the wire adjusting base (22) can be right attached to the first limiting protruding part (218) and the second limiting protruding part (219) of the fixing base (21), so that the wire adjusting base (22) can be accommodated in the accommodating groove (23) of the fixing base (21) without the risk of falling.

Further, please refer to FIG. 3 to FIG. 5, the wire adjusting base (22) is provided with an actuating groove (224) and a wire incoming groove (225) relative to the through hole (216) and the wire inlet (217) of the fixing base (21). At the position where the wire incoming groove (225) is communicated with the actuating groove (224), a rotating shaft (226) is further provided in the actuating groove (224), and the rotating shaft (226) is provided with a wire tying hole (227) and annularly provided with a plurality of convex tooth parts (228).

Further, as shown in FIG. 3 to FIG. 5, in use of this embodiment, first a track wire (30) passes through the wire returning part (215) of the fixing base (21), so that the track wire (30) is folded back to enter the wire inlet (217) of the fixing base (21) and the wire incoming groove (225) of the wire adjusting base (22) and then enters the actuating groove (224). Then the track wire (30) is fixed to the wire tying hole (227) of the rotating shaft (226). Next, the wire adjusting base (22) is assembled in the accommodating groove (23) of the fixing base (21), so that the rotating shaft (226) can be limited between the fixing base (21) and the wire adjusting base (22), and one end of the rotating shaft (226) is enabled to be accommodated in the through hole (216) of the fixing base (21). Next, the fixing base (21) stretches into the opening (131) of the combining groove (13) of the body (1), and the fastener (212) can be jointed to the abutting joint part (133) of the fixing base (21). The frame material (201) then abuts against the convex clamping part (211), thereby enabling the fixing base (21) to be elastically clamped in the opening (131) of the combining groove (13), so that the risk that the fixing base (21) falls out of the combining groove (13) of the body (1) is avoided. When the track wire (30) is too tight or loose, the rotating shaft (26) in the wire adjusting base (22) can be loosened or tightened by means of the through hole (216) on the fixing base (21), so that the track wire (30) is always maintained at a proper tension. Since the track wire (30) enters the fixing base (21) and the wire adjuster (22) by means of the recessed groove of the frame material (201), when the track wire (30) swings due to stress when a screen is opened or closed, the track wire (30) is provided in the recessed groove of the frame material (201), when the track wire swings due to stress, the situation that the track wire swings out of the track of the frame material (201) is avoided, so this embodiment can really solve the problem that when the screen is opened or closed, the screen is unsmoothly opened or closed or gets stuck easily.

The above described embodiment is only intended to illustrate the technical idea and features of the present invention, is implemented to make all the persons skilled in the art know the content of the present invention, and cannot be constructed as limiting the scope of the present invention as defined by the appended claims.

## Claims

1. A corner connector structure of a screen apparatus, comprising a body (1), the body (1) being at least provided with a first connecting part (11) and a second connecting part (12) which is separated from the first connecting part (11) by an angle, a combining groove (13) being provided at the position of the first connecting part (11) or the second connecting part (12) of the body (1), the combining groove (13) being provided with an opening (131), and a wire adjuster (20) being provided in the combining groove (13).

2. The corner connector structure of a screen apparatus according to claim 1, wherein the first connecting part (11) is separated from the second connecting part (12) by 85-95 degrees.

3. The corner connector structure of a screen apparatus according to claim 1, wherein the first connecting part (11) is at least provided with a first combining piece (111), and the second connecting part (12) is at least provided with a second combining piece (121).

4. The corner connector structure of a screen apparatus according to claim 3, wherein both the first combining piece (111) and the second combining piece (121) are an inserting piece.

5. The corner connector structure of a screen apparatus according to claim 1, wherein the combining groove (13) further comprises a lateral notch (132), and the combining groove (13) protrudes out relative to the side wall of the lateral notch (132) to form an abutting joint part (133).

6. The corner connector structure of a screen apparatus according to claim 5, wherein the wire adjuster (20) further comprises a wire adjusting base (22) and a fixing base (21), the wire adjusting base (22) is assembled and combined with the fixing base (21), and the fixing base (21) is provided in the opening (131) of the combining groove (13) of the body (1).

7. The corner connector structure of a screen apparatus according to claim 6, wherein the peripheral edge of the fixing base (21) is at least provided with a fastener (212), the fastener (212) is attached to the upper side and the lower side of the abutting joint part (133) of the body (1), and the fastener (212) has a compression space (213).

8. The corner connector structure of a screen apparatus according to claim 6, wherein the fixing base (21) is provided with an accommodating groove (23), and the wire adjusting base (22) is accommodated in the accommodating groove (23); a first limiting protruding part (218) and a second limiting protruding part (219) are provided in the accommodating groove (23), and the wire adjusting base (22) is provided with a first recessed part (221) and a second recessed part (222) relative to the first limiting protruding part (218) and the second limiting protruding part (219) of the fixing base (21).

9. The corner connector structure of a screen apparatus according to claim 6, wherein the fixing base (21) is provided with at least a through hole (216), the wire adjusting base (22) is provided with an actuating groove (224) relative to the through hole (216) of the fixing base (21), a rotating shaft (226) is provided in the actuating groove (224), and the rotating shaft (226) is annularly provided with a plurality of convex tooth parts (228).

10. The corner connector structure of a screen apparatus according to claim 1, wherein the first connecting part (11) and the second connecting part (12) are each combined with a frame material (201) of a frame body.

## Patentansprüche

1. Eine Eckverbindungsstruktur einer Bildschirmvorrichtung, umfassend einen Körper (1), wobei der Körper (1) mindestens mit einem ersten Verbindungsteil (11) und einem zweiten Verbindungsteil (12) versehen ist, die durch einen Winkel voneinander getrennt sind, wobei an der Position des ersten Verbindungsteils (11) oder des zweiten Verbindungsteils (12) des Körpers (1) eine Kombinationsnut (13) vorgesehen ist, die Kombinationsnut (13) eine Öffnung (131) aufweist und in der Kombinationsnut (13) ein Drahtjustierer (20) vorgesehen ist.

2. Die Eckverbindungsstruktur einer Bildschirmvorrichtung nach Anspruch 1, wobei das erste Verbindungsteil (11) vom zweiten Verbindungsteil (12) durch 85 bis 95 Grad getrennt ist.

3. Die Eckverbindungsstruktur einer Bildschirmvorrichtung nach Anspruch 1, wobei das erste Verbindungsteil (11) mindestens mit einem ersten Kombinationselement (111) versehen ist und das zweite Verbindungsteil (12) mindestens mit einem zweiten Kombinationselement (121) versehen ist.

4. Die Eckverbindungsstruktur einer Bildschirmvorrichtung nach Anspruch 3, wobei sowohl das erste Kombinationselement (111) als auch das zweite Kombinationselement (121) ein Einsteckteil sind.

5. Die Eckverbindungsstruktur einer Bildschirmvorrichtung nach Anspruch 1, wobei die Kombinationsnut (13) ferner eine seitliche Kerbe (132) umfasst und die Kombinationsnut (13) gegenüber der Seitenwand der seitlichen Kerbe (132) vorspringt, um einen Anlageverbindungsteil (133) zu bilden.

6. Die Eckverbindungsstruktur einer Bildschirmvorrichtung nach Anspruch 5, wobei der Drahtjustierer (20) ferner eine Drahtjustierbasis (22) und eine Befestigungsbasis (21) umfasst, wobei die Drahtjustierbasis (22) mit der Befestigungsbasis (21) zusammengebaut und kombiniert ist und die Befestigungsbasis (21) in der Öffnung (131) der Kombinationsnut (13) des Körpers (1) vorgesehen ist.

7. Die Eckverbindungsstruktur einer Bildschirmvorrichtung nach Anspruch 6, wobei der Rand der Befestigungsbasis (21) mindestens mit einem Befestigungselement (212) versehen ist, wobei das Befestigungselement (212) an der Oberseite und der Unterseite des Anlageverbindungsteils (133) des Körpers (1) angebracht ist und das Befestigungselement (212) einen Pressraum (213) aufweist.

8. Die Eckverbindungsstruktur einer Bildschirmvorrichtung nach Anspruch 6, wobei die Befestigungsbasis (21) mit einer Aufnahmenut (23) versehen ist und die Drahtjustierbasis (22) in der Aufnahmenut (23) aufgenommen ist; wobei in der Aufnahmenut (23) ein erster Begrenzungsvorsprung (218) und ein zweiter Begrenzungsvorsprung (219) vorgesehen sind und die Drahtjustierbasis (22) mit einer ersten Vertiefung (221) und einer zweiten Vertiefung (222) versehen ist, die relativ zum ersten Begrenzungsvorsprung (218) und zum zweiten Begrenzungsvorsprung (219) der Befestigungsbasis (21) angeordnet sind.

9. Die Eckverbindungsstruktur einer Bildschirmvorrichtung nach Anspruch 6, wobei die Befestigungsbasis (21) mit mindestens einem Durchgangsloch (216) versehen ist, die Drahtjustierbasis (22) mit einer Betätigungsnut (224) versehen ist, die relativ zum Durchgangsloch (216) der Befestigungsbasis (21) angeordnet ist, wobei in der Betätigungsnut (224) eine Drehachse (226) vorgesehen ist und die Drehachse (226) ringförmig mit einer Vielzahl von konvexen Zahnabschnitten (228) versehen ist.

10. Die Eckverbindungsstruktur einer Bildschirmvorrichtung nach Anspruch 1, wobei das erste Verbindungsteil (11) und das zweite Verbindungsteil (12) jeweils mit einem Rahmenmaterial (201) eines Rahmenkörpers kombiniert sind.

## Revendications

1. Une structure de connecteur d'angle d'un appareil d'écran, comprenant un corps (1), le corps (1) étant pourvu au moins d'une première partie de connexion (11) et d'une deuxième partie de connexion (12) séparées l'une de l'autre par un angle, une rainure de combinaison (13) étant disposée à la position de la première partie de connexion (11) ou de la deuxième partie de connexion (12) du corps (1), la rainure de combinaison (13) étant pourvue d'une ouverture (131), et un dispositif de réglage de fil (20) étant disposé dans la rainure de combinaison (13).

2. La structure de connecteur d'angle d'un appareil d'écran selon la revendication 1, dans laquelle la première partie de connexion (11) est séparée de la deuxième partie de connexion (12) par 85 à 95 degrés.

3. La structure de connecteur d'angle d'un appareil d'écran selon la revendication 1, dans laquelle la première partie de connexion (11) est pourvue au moins d'une première pièce de combinaison (111), et la deuxième partie de connexion (12) est pourvue au moins d'une deuxième pièce de combinaison (121).

4. La structure de connecteur d'angle d'un appareil d'écran selon la revendication 3, dans laquelle la première pièce de combinaison (111) et la deuxième pièce de combinaison (121) sont toutes deux une pièce d'insertion.

5. La structure de connecteur d'angle d'un appareil d'écran selon la revendication 1, dans laquelle la rainure de combinaison (13) comprend en outre une encoche latérale (132), et la rainure de combinaison (13) fait saillie par rapport à la paroi latérale de l'encoche latérale (132) pour former une partie de joint d'appui (133).

6. La structure de connecteur d'angle d'un appareil d'écran selon la revendication 5, dans laquelle le dispositif de réglage de fil (20) comprend en outre une base de réglage de fil (22) et une base de fixation (21), la base de réglage de fil (22) étant assemblée et combinée avec la base de fixation (21), et la base de fixation (21) étant disposée dans l'ouverture (131) de la rainure de combinaison (13) du corps (1).

7. La structure de connecteur d'angle d'un appareil d'écran selon la revendication 6, dans laquelle le bord périphérique de la base de fixation (21) est pourvu au moins d'un élément de fixation (212), l'élément de fixation (212) étant attaché au côté supérieur et au côté inférieur de la partie de joint d'appui (133) du corps (1), et l'élément de fixation (212) présentant un espace de compression (213).

8. La structure de connecteur d'angle d'un appareil d'écran selon la revendication 6, dans laquelle la base de fixation (21) est pourvue d'une rainure de réception (23), et la base de réglage de fil (22) est logée dans la rainure de réception (23) ; une première partie saillante de limitation (218) et une deuxième partie saillante de limitation (219) étant prévues dans la rainure de réception (23), et la base de réglage de fil (22) étant pourvue d'une première partie en retrait (221) et d'une deuxième partie en retrait (222) correspondant respectivement à la première partie saillante de limitation (218) et à la deuxième partie saillante de limitation (219) de la base de fixation (21).

9. La structure de connecteur d'angle d'un appareil d'écran selon la revendication 6, dans laquelle la base de fixation (21) est pourvue d'au moins un trou traversant (216), la base de réglage de fil (22) est pourvue d'une rainure d'actionnement (224) correspondant au trou traversant (216) de la base de fixation (21), un arbre rotatif (226) étant disposé dans la rainure d'actionnement (224), et l'arbre rotatif (226) étant pourvu annulairement d'une pluralité de parties dentées convexes (228).

10. La structure de connecteur d'angle d'un appareil d'écran selon la revendication 1, dans laquelle la première partie de connexion (11) et la deuxième partie de connexion (12) sont chacune combinées avec un matériau de cadre (201) d'un corps de cadre.
